# FASCICULE DE BREVET EUROPEEN

(11) **EP 3 720 634 B1**
(45) Date de publication et mention de la délivrance du brevet: **27.03.2024**
(21) Numéro de dépôt: 18833448.6
(22) Date de dépôt: 03.12.2018
(51) Int. Cl.: B33Y 30/00, B33Y 40/00, B29C 64/307, B29C 31/00, B65D 88/00, B65D 90/48, B22F 12/52, B29C 31/02, B22F 12/80, B22F 10/28, B22F 10/25

(54) **CONTAINER INERTABLE DE TRANSPORT D'UNE POUDRE DE FABRICATION ADDITIVE**
INERTFÄHIGER BEHÄLTER ZUM TRANSPORTIEREN EINES PULVERS FÜR DIE GENERATIVE FERTIGUNG
INERTABLE CONTAINER FOR TRANSPORTING AN ADDITIVE MANUFACTURING POWDER

(30) Priorité: 05.12.2017 FR 1761659
(43) Date de publication de la demande: 14.10.2020
(73) Titulaire: AddUp, 63118 Cébazat (FR)
(72) Inventeur: EYERMANN, Didier, 63118 Cebazat (FR); ANGELE, Ludovic, 63118 Cebazat (FR); GONZALEZ, Antonio, 63118 Cebazat (FR)
(74) Mandataire: Barascou, Frédéric
(86) Numéro de dépôt international: PCT/FR2018/053079
(87) Numéro de publication internationale: WO 2019/110900

(56) Documents cités:
- WO-A2-2013/162352
- FR-A1- 2 983 182
- GB-A- 2 520 161
- Anonymous: "SteriSplit Valve Designed To Transfer Sterile Or Potentially Toxic Products", , 24 novembre 2016 (2016-11-24), XP055500591, Extrait de l'Internet: URL:https://bulkinside.com/sterisplit-valv e/ [extrait le 2018-08-17]

## Description

L'invention se situe dans le domaine de la fabrication additive à base de poudre par fusion des grains de cette poudre à l'aide d'une ou plusieurs sources de puissance comme un ou plusieurs faisceaux laser et/ou un ou plusieurs faisceaux d'électrons.

Plus précisément, l'invention se situe dans le domaine de la fabrication additive par dépôt de lit de poudre ou par projection de poudre.

L'invention vise à faciliter le transport et le stockage de plusieurs dizaines de litres de poudre de fabrication additive tout en préservant les qualités de la poudre. L'invention vise aussi à faciliter l'approvisionnement en poudre de différentes machines de fabrication additive ou d'autres dispositifs utiles à la fabrication additive comme des dispositifs de tamisage ou de séchage de poudre. L'invention vise aussi à faciliter la récupération de poudre depuis différentes machines de fabrication additive ou depuis d'autres dispositifs utiles à la fabrication additive comme des dispositifs de tamisage ou de séchage de poudre, ou des dispositifs de nettoyage des pièces fabriquées et des plateaux de fabrication. Enfin, l'invention vise aussi à faciliter le conditionnement ou le reconditionnement de lots de poudre neuve ou recyclée.

Dans le domaine de la fabrication additive par dépôt de lit de poudre ou projection de poudre, la qualité des pièces fabriquées est directement liée à la qualité de la poudre de fabrication additive utilisée. Donc, si la qualité de la poudre est dégradée au cours de son transport, de son stockage, ou de son transfert vers une machine de fabrication additive ou vers un autre dispositif, les pièces fabriquées avec cette poudre offriront de moins bonnes performances ou pourront même présenter des défauts entrainant une mise au rebut de ces pièces.

Par exemple, la composition chimique d'une poudre de fabrication additive peut évoluer par réaction physico-chimique, comme par exemple par oxydation, par adsorption ou par absorption, au contact de la vapeur d'eau, de l'oxygène et/ou de l'azote contenus dans l'air présent dans l'atelier où est utilisée la poudre, et cette évolution peut entraîner une diminution de la résistance mécanique des pièces fabriquées ou une réduction de la résistance à la corrosion des pièces fabriquées.

Parallèlement, et en raison de certains composés chimiques toxiques qu'elles peuvent contenir ou des risques d'incendie ou d'explosion liés à leur réactivité avec l'oxygène, certaines poudres de fabrication additives peuvent aussi présenter des risques sanitaires, d'hygiène ou de sureté vis-à-vis des personnes présentes dans les ateliers où ces poudres sont manipulées et utilisées.

Donc, tant pour préserver leur qualité que la santé et la sécurité des personnes, il est généralement nécessaire de transporter, de stocker et de transférer les poudres de fabrication additive dans des contenants étanches ou dans des circuits fermés, et en évitant de mettre ces poudres au contact de l'air présent dans les locaux où ces poudres sont utilisées.

Actuellement, les poudres de fabrication additives sont fournies dans des pots scellés et contenant seulement quelques litres de poudre dans un gaz inerte. D'une part, plusieurs pots sont nécessaires à l'alimentation d'une machine de fabrication additive pour un cycle entier de production. De plus, ces pots ne permettent pas un stockage suffisamment hermétique à l'air extérieur et à la vapeur d'eau contenue dans cet air extérieur dans la durée. Et enfin, une fois ouvert, ces pots ne peuvent pas être réutilisés pour stocker de nouveau la poudre sous atmosphère inerte. GB2520161A concerne un container inertable de transport de poudre, utilisé pour le transport et stockage de poudre, ayant la forme d'un silo, pour la fabrication additive à base de poudre ayant un moyen de piquage.

FR2983182A1 concerne un container pressuré avec un gaz neutre pour le transfert de poudre présentant une demi valve passive.

Il existe donc un besoin de pouvoir transporter plusieurs dizaines de litres de poudre de fabrication additive avec un seul contenant, réutilisable et capable de contenir la poudre sous atmosphère protégée et de manière hermétique à l'air extérieur et à la vapeur d'eau contenue dans cet air extérieur dans la durée.

Enfin, les poudres de fabrication additive sont des produits fluides et insaisissables, et il existe un besoin de faciliter la manipulation de ces poudres tout en préservant la qualité des poudres et la santé et la sécurité des personnes, par exemple en limitant les risques d'incendie et d'explosion lors du transport ou du transfert des poudres réactives à l'oxygène.

La présente invention a pour objectif de fournir une solution aux besoins précités.

A cet effet, l'invention a pour objet un container inertable de transport d'une poudre de fabrication additive, le container comprenant un volume inertable et une ouverture principale donnant accès à l'intérieur de ce volume inertable, le volume inertable comprenant une partie supérieure et une partie inférieure, l'ouverture principale étant située en partie inférieure du volume inertable, et la section du volume inertable augmentant progressivement dans au moins une partie de la hauteur de ce volume inertable et de la partie inférieure vers la partie supérieure du volume inertable.

Selon l'invention, l'ouverture principale est équipée d'une demi-vanne passive permettant de fermer cette ouverture principale de manière étanche à l'air et à l'humidité de l'air, et le container comprend au moins deux piquages d'inertage, au moins un premier piquage supérieur donnant accès à la partie supérieure du volume inertable et au moins un second piquage inférieur donnant accès à la partie inférieure du volume inertable.

Grâce à la demi-vanne passive, le container permet de contenir la poudre sous atmosphère protégée et de manière hermétique à l'air extérieur et à la vapeur d'eau contenue dans cet air extérieur dans la durée, et grâce aux piquages d'inertage et à la demi-vanne, le container peut être rempli à nouveau avec un gaz inerte en vue d'une nouvelle utilisation avec un nouveau lot de poudre.

De plus, lorsque les piquages d'inertage sont reliés à un circuit d'alimentation en gaz inerte, ces piquages peuvent être utilisés pour maintenir à des valeurs constantes la pression et le taux de gaz inerte dans le container, permettant ainsi de pallier aux éventuelles micro-fuites et de garantir la qualité de la poudre contenue dans ce container dans le temps.

D'autres caractéristiques et avantages de l'invention apparaîtront dans la description qui va suivre. Cette description, donnée à titre d'exemple et non limitative, se réfère aux dessins joints en annexe sur lesquels :
- la figure 1 est une vue en perspective d'un container selon l'invention dans un premier mode de réalisation,
- la figure 2 est une vue en coupe selon un plan médian transversal d'un container selon l'invention dans un premier mode de réalisation,
- la figure 3 est une vue en perspective d'un container selon l'invention dans un second mode de réalisation, et
- les figures 4A et 4B sont des vues de côté d'un container selon l'invention dans un second mode de réalisation.

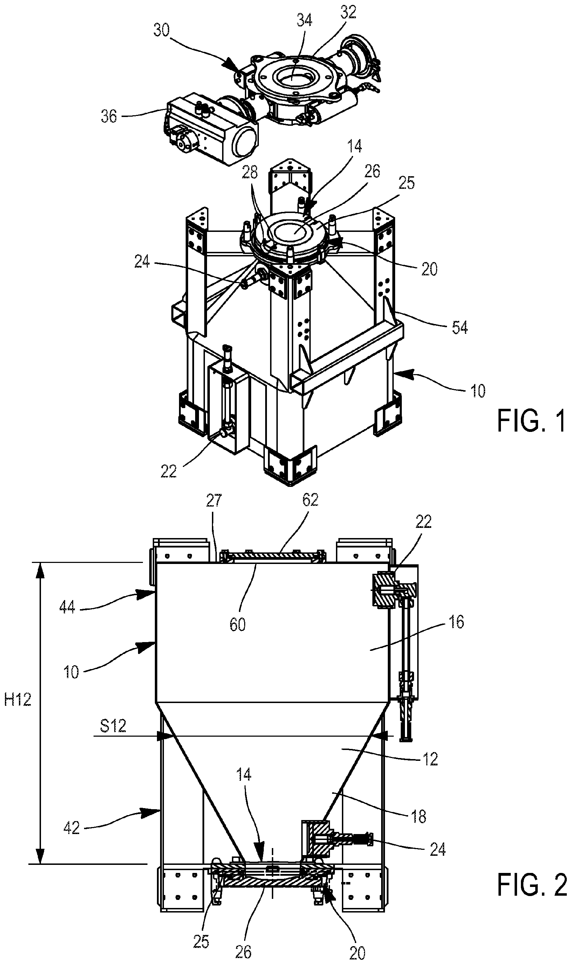

L'invention est relative à un container inertable 10 de transport d'une poudre de fabrication additive tel qu'il est illustré par les figures 1 à 4B.

Par poudre de fabrication additive, l'invention entend une poudre dont les grains ont leur plus grande dimension inférieure ou égale à cinq cent micromètres.

Dans une application particulièrement visée par la présente invention, les grains de cette poudre sont susceptibles d'être altérés par un contact avec l'air présent dans les locaux où cette poudre est utilisée ou par un contact avec l'humidité de cet air.

Par exemple, les poudres destinées à être transportées ou stockées avec un container inertable selon l'invention sont des poudres métalliques comprenant au moins un ou plusieurs métaux oxydables au contact de l'oxygène ou de l'azote contenu dans l'air présent dans les locaux où ces poudres sont utilisées.

En vue de transporter et de stocker une telle poudre de fabrication additive, le container 10 comprend un volume inertable 12 et une ouverture principale 14 donnant accès à l'intérieur de ce volume inertable 12. Plus en détail, le volume inertable 12 comprend une partie supérieure 16 et une partie inférieure 18, et l'ouverture principale 14 est située en partie inférieure 18 du volume inertable.

Afin d'éviter un réapprovisionnement d'une machine de fabrication additive en cours de production, le volume inertable 12 a une contenance d'au moins cinq litres et pouvant aller jusqu'à deux mille litres, la contenance du volume inertable étant adaptée au volume de la zone ou des zones de fabrication de la machine de fabrication additive en prenant en compte la quantité de poudre pouvant être déposée en excès par les moyens de mise en couche ou de projection de la poudre.

Pour éviter la création de zones de rétention de poudre dans le container 10, la section S12 du volume inertable 12 augmente progressivement dans au moins une partie de la hauteur H10 de ce volume inertable 12 et de la partie inférieure 18 vers la partie supérieure 16 de ce volume inertable 12. Donc, la section S12 du volume inertable 12 augmente progressivement au-dessus de l'ouverture principale 14, favorisant ainsi l'écoulement de la poudre vers cette ouverture principale.

Dans un premier mode de réalisation illustré sur les figures 1 et 2, la section S12 du volume inertable 12 augmente progressivement dans la partie inférieure 18 de ce volume inertable 12 et cette section S12 du volume inertable 12 reste constante dans la partie supérieure 16 de ce volume inertable 12.

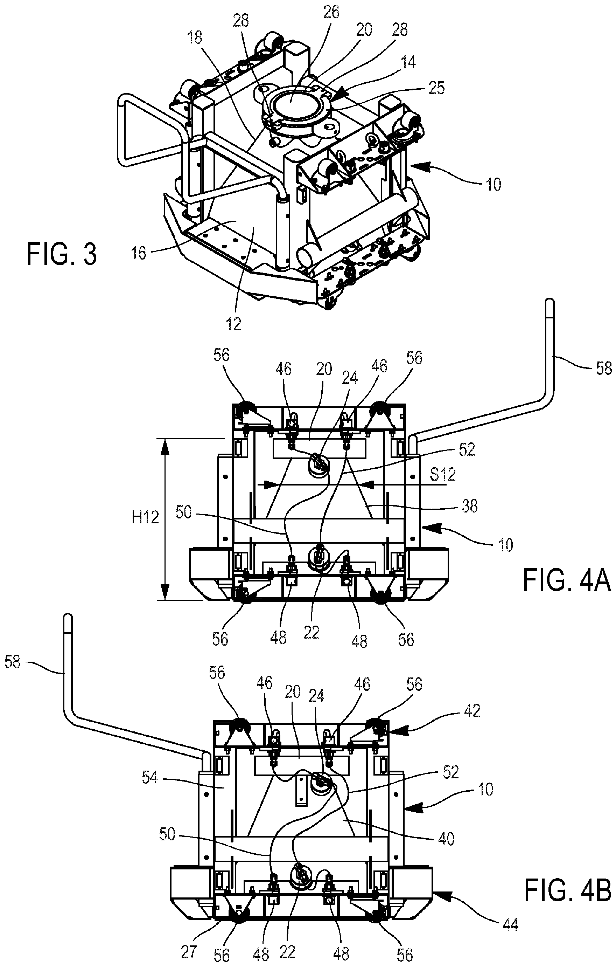

Dans un second mode de réalisation illustré par les figures 3 et 4A et 4B, la section S12 du volume inertable 12 augmente progressivement dans toute la hauteur H10 de ce volume inertable 12.

Le volume inertable 12 peut prendre une forme tronconique ou pyramidale dans la partie où sa section S12 augmente progressivement.

Dans le premier et le second mode de réalisation du container illustré sur les figures, le volume inertable 12 prend une forme pyramidale à 4 faces avec des arêtes arrondies entre ses différentes faces dans la partie où sa section S12 augmente progressivement.

Afin d'éviter tout contact de la poudre avec l'air présent à l'extérieur du volume inertable 12, l'ouverture principale 14 est équipée d'une demi-vanne passive 20 permettant de fermer cette ouverture principale 14 de manière étanche à l'air et à l'humidité.

En combinaison avec cette demi-vanne passive 20, et afin de pouvoir remplir le volume inertable 12 avec un gaz inerte, le container 10 comprend au moins deux piquages d'inertage, au moins un premier piquage supérieur 22 donnant accès à la partie supérieure 16 du volume inertable et au moins un second piquage inférieur 24 donnant accès à la partie inférieure 18 du volume inertable.

Avantageusement, la présence d'au moins deux piquages inférieur et supérieur permet de remplir complètement le volume inertable de gaz inerte indépendamment de la position dans laquelle est utilisée le container.

Par gaz inerte, l'invention entend un gaz qui n'entraine pas de réaction physico-chimique, comme par exemple l'oxydation, l'absorption ou l'absorption, susceptible de dégrader les caractéristiques et la qualité de la poudre de fabrication additive. Par exemple, pour certaines poudres, un gaz inerte peut être l'azote, l'argon, l'hélium ou un mélange de deux ou de trois de ces gaz.

Ainsi, lorsque le container est utilisé pour alimenter en poudre une machine de fabrication additive ou un autre dispositif de fabrication additive, le container est utilisé avec son ouverture principale vers le bas, et le gaz inerte est introduit dans le volume inertable par un piquage supérieur. Toutefois, pour faciliter l'écoulement de la poudre vers l'ouverture principale, du gaz inerte peut aussi être introduit dans le volume inertable par un piquage inférieur. Plus en détail, en étant introduit par un piquage inférieur, le gaz inerte circule dans la poudre et permet de briser une éventuelle voûte de poudre qui se serait constituée au-dessus de l'ouverture principale. Lorsque du gaz inerte est ainsi introduit par un piquage inférieur, le piquage supérieur peut être utilisé pour évacuer du gaz inerte et ainsi limiter la surpression de gaz inerte dans le volume inertable.

A l'inverse, lorsque le container est utilisé pour recevoir de la poudre depuis une machine de fabrication additive ou depuis un autre dispositif de fabrication additive, le container est utilisé avec son ouverture principale vers le haut, et le gaz inerte est introduit dans le volume inertable par un piquage inférieur.

Enfin, lorsque le container a été ouvert, vidé et mis en contact avec l'air extérieur, la demi-vanne passive est fermée, et deux piquages donnant accès au volume inertable sont utilisés pour remplir à nouveau le volume inertable avec un gaz inerte, un premier piquage étant utilisé pour introduire le gaz inerte dans le volume inertable et l'autre piquage permettant d'évacuer les gaz non inertes présents à l'intérieur du volume inertable et chassés par le gaz inerte introduit via le premier piquage.

Comme l'illustrent les différentes figures, le volume inertable étant fermé en partie supérieure par une paroi supérieure 27, chaque piquage inférieur 24 est situé à proximité immédiate de l'ouverture principale 14, et chaque piquage supérieur 22 est situé à proximité immédiate de la paroi supérieure 27.

En vue de la fermeture hermétique du volume inertable, la demi-vanne passive 20 comprend un corps 25 supportant un papillon 26 de fermeture de l'ouverture principale 14 du container 12 et des moyens de verrouillage 28 de ce papillon en position fermée.

Ces moyens de verrouillage 28 sont déverrouillés par l'accouplement de la demi-vanne passive avec une demi-vanne active, les moyens de verrouillage autorisant la séparation de la demi-vanne passive et de la demi-vanne active uniquement lorsque le papillon 26 est en position fermée, et les moyens de verrouillage 28 maintenant le papillon 26 en position fermée tant que la demi-vanne passive n'est pas accouplée avec une demi-vanne active.

Une demi-vanne active 30 destinée à être accouplée avec la demi-vanne passive 20 du container 10 est illustrée en figure 1. Cette demi-vanne active 30 comprend un corps 32 supportant un papillon 34 destiné à être accolé au papillon 26 de la demi-vanne passive 20. De plus, cette demi-vanne active 30 comprend aussi un actionneur 36, par exemple pneumatique, permettant d'entraîner en rotation le papillon 34 de la demi-vanne active 30.

Aussi, les moyens de verrouillage 28 du papillon en position fermée sont déverrouillés par l'accouplement du papillon 26 de la demi-vanne passive avec le papillon 34 de la demi-vanne active, la demi-vanne active comprenant des moyens de déverrouillage des moyens de verrouillage 28 de la demi-vanne passive 20.

Par exemple, le papillon 34 de la demi-vanne active forme ou supporte les moyens de déverrouillage des moyens de verrouillage 28 de la demi-vanne passive 20.

Les moyens de verrouillage 28 de la demi-vanne passive 20 prenant par exemple la forme d'au moins une clavette ou d'au moins un goujon mobile en translation, la mise en mouvement de cette clavette ou de ce goujon lorsque la demi-vanne passive est accouplée avec une demi-vanne active permet de libérer une rotation du papillon 26 et du papillon 34 autour d'un axe traversant l'ouverture principale 14.

Pour actionner le déverrouillage des moyens de verrouillage 28 de la demi-vanne passive 20, les moyens de déverrouillage de la demi-vanne active prennent par exemple la forme d'au moins un pion, ou d'au moins une came, ou plus simplement d'au moins une surface permettant de mettre en mouvement la clavette ou le goujon des moyens de verrouillage 28 de la demi-vanne passive 20. Le pion, la came ou la surface des moyens de déverrouillage sont par exemple portés par le papillon 34 de la demi-vanne active.

Lorsque la demi-vanne active est accouplée à la demi-vanne passive, les moyens de déverrouillage de la demi-vanne active déverrouillent les moyens de verrouillage de la demi-vanne passive, le papillon 34 de la demi-vanne active est accolé au papillon 26 de la demi-vanne passive, et la mise en rotation du papillon 34 sous l'effet de l'actionneur 36 de la demi-vanne active entraîne la mise en rotation du papillon 26 de la demi-vanne passive et donc l'ouverture de l'ouverture principale 14.

Dans le second mode de réalisation du container illustré par les figures 3, 4A et 4B, le volume inertable 12 comprenant un côté droit 38 et un côté gauche 40, le container comprend un piquage inférieur 24 et un piquage supérieur 22 du côté droit du volume inertable, et le container comprend un piquage inférieur 24 et un piquage supérieur 22 du côté gauche du volume inertable.

Toujours dans le second mode de réalisation du container illustré par les figures 3, 4A et 4B, le container 10 comprenant une partie inférieure 42 et une partie supérieure 44, le container comprend au moins deux raccords inférieurs 46 positionnés en partie inférieure 42 du container et au moins deux raccords supérieurs 48 positionnés en partie supérieure 44 du container. Un premier raccord supérieur 48 et un premier raccord inférieur 46 sont reliés par un même conduit 50 à un piquage inférieur 24 donnant accès à la partie inférieure 18 du volume inertable, et un second raccord supérieur 48 et un second raccord inférieur 46 sont reliés par un même conduit 52 à un piquage supérieur 22 donnant accès à la partie supérieure 16 du volume inertable.

Ainsi, dans le second mode de réalisation du container, le container comprenant des piquages inférieurs 24 et supérieurs 22 des côtés droit 38 et gauche 40 du volume inertable, le container comprend quatre raccords de chaque côté du volume inertable. Du côté droit 38 du volume inertable, un raccord inférieur 46 et un raccord supérieur 48 sont reliés par un même conduit 50 à un piquage inférieur 24, et un raccord inférieur 46 et un raccord supérieur 48 sont reliés par un même conduit 52 à un piquage supérieur 22. Et du côté gauche 40 du volume inertable, un raccord inférieur 46 et un raccord supérieur 48 sont reliés par un même conduit 50 à un piquage inférieur 24, et un raccord inférieur 46 et un raccord supérieur 48 sont reliés par un même conduit 52 à un piquage supérieur 22.

Comme l'illustrent les différentes figures, le container 10 comprend un châssis 54 à l'intérieur duquel est placé le volume inertable 12. Ce châssis est sensiblement parallélépipédique et il permet de faciliter la manutention du volume inertable 12 et donc du container.

Avantageusement, les raccords inférieur 46 et supérieur 48 sont supportés par le châssis 54 du container.

Dans le container selon l'invention, la partie supérieure 16 du volume inertable fait partie de la partie supérieure 44 du container et la partie inférieure 18 du volume inertable fait partie de la partie inférieure 42 du container. Ainsi, les dimensions du container 10 sont sensiblement identiques aux dimensions du volume inertable 12.

Toujours en vue de faciliter la manutention du volume inertable 12, le container 10 comprend des roulettes 56 en partie inférieure 42 et en partie supérieure 44. Ces roulettes 56 sont supportées par le châssis 54 du container.

Dans le même objectif, le châssis 54 du container permet de recevoir une poignée 58 escamotable en partie supérieure 44 du container ou en partie inférieure 42 du container, en fonction de l'orientation dans laquelle est utilisé le container (ouverture principale vers le haut ou ouverture principale vers le bas).

Enfin, pour permettre un nettoyage complet de l'intérieur du volume inertable 12, le container 10 comprend une ouverture auxiliaire 60 donnant accès à l'intérieur du volume inertable 12, cette ouverture auxiliaire étant équipée d'un couvercle de fermeture 62.

Avantageusement, l'ouverture auxiliaire 60 est emménagée en partie supérieure 44 du volume inertable 12. Plus précisément, l'ouverture auxiliaire 60 est emménagée au travers de la paroi supérieure 27 du volume inertable 12.

Cette ouverture auxiliaire 60 est suffisamment grande pour pouvoir assurer un nettoyage complet de l'intérieur du volume inertable 12 et un bon contrôle visuel de l'intérieur du volume inertable 12, ce contrôle visuel permettant de s'assurer que l'intérieur du volume inertable 12 est propre et exempt de toute impureté avant de le refermer, de le remplir de gaz inerte et d'y introduire un nouveau lot de poudre de fabrication additive.

## Revendications

1. Container inertable (10) de transport d'une poudre de fabrication additive, le container (10) comprenant un volume inertable (12) et une ouverture principale (14) donnant accès à l'intérieur de ce volume inertable, le volume inertable (12) comprenant une partie supérieure (16) et une partie inférieure (18), l'ouverture principale (14) étant située en partie inférieure (18) du volume inertable, et la section (S12) du volume inertable (12) augmentant progressivement dans au moins une partie de la hauteur (H10) du container (10) et de la partie inférieure (18) vers la partie supérieure (16) du volume inertable, l'ouverture principale est équipée d'une demi-vanne passive (20) permettant de fermer cette ouverture principale (14) de manière étanche à l'air et à l'humidité de l'air, et le container étant caractérisé en que le container comprend au moins deux piquages d'inertage, au moins un premier piquage supérieur (22) donnant accès à la partie supérieure (16) du volume inertable et au moins un second piquage inférieur (24) donnant accès à la partie inférieure (18) du volume inertable.

2. Container inertable (10) de transport d'une poudre de fabrication additive selon la revendication 1, dans lequel, la demi-vanne passive (20) comprenant un corps (25) supportant un papillon (26) de fermeture de l'ouverture principale (14) du container, la demi-vanne passive (20) comprend des moyens de verrouillage (28) de ce papillon en position fermée.

3. Container inertable (10) de transport d'une poudre de fabrication additive selon la revendication 2, dans lequel les moyens de verrouillage (28) sont déverrouillés par l'accouplement de la demi-vanne passive avec une demi-vanne active, les moyens de verrouillage (28) autorisant la séparation de la demi-vanne passive et de la demi-vanne active uniquement lorsque le papillon (26) est en position fermée, et les moyens de verrouillage (28) maintenant le papillon (26) en position fermée tant que la demi-vanne passive n'est pas accouplée avec une demi-vanne active.

4. Container inertable (10) de transport d'une poudre de fabrication additive selon la revendication 2 ou 3, dans lequel les moyens de verrouillage (28) du papillon (26) en position fermée sont déverrouillés par l'accouplement du papillon (26) de la demi-vanne passive avec le papillon d'une demi-vanne active, la demi-vanne active comprenant des moyens de déverrouillage des moyens de verrouillage (28) de la demi-vanne passive (20).

5. Container inertable (10) de transport d'une poudre de fabrication additive selon l'une des revendications précédentes, dans lequel, le volume inertable (12) comprenant un côté droit (38) et un côté gauche (40), le container comprend un piquage inférieur (24) et un piquage supérieur (22) du côté droit du volume inertable, et le container comprend un piquage inférieur (24) et un piquage supérieur (22) du côté gauche du volume inertable.

6. Container inertable (10) de transport d'une poudre de fabrication additive selon l'une des revendications précédentes, dans lequel, le container (10) comprenant une partie inférieure (42) et une partie supérieure (44), le container comprend au moins deux raccords inférieurs (46) positionnés en partie inférieure (42) du container et au moins deux raccords supérieurs (48) positionnés en partie supérieure (44) du container, un premier raccord supérieur (48) et un premier raccord inférieur (46) étant reliés par un même conduit (50) à un piquage inférieur (24) donnant accès à la partie inférieure (18) du volume inertable, et un second raccord supérieur (48) et un second raccord inférieur (46) étant reliés par un même conduit (52) à un piquage supérieur (22) donnant accès à la partie supérieure (16) du volume inertable.

7. Container inertable (10) de transport d'une poudre de fabrication additive selon l'une des revendications précédentes, dans lequel la partie supérieure (16) du volume inertable fait partie de la partie supérieure (44) du container, et dans lequel la partie inférieure (18) du volume inertable fait partie de la partie inférieure (42) du container.

8. Container inertable (10) de transport d'une poudre de fabrication additive selon l'une des revendications 1 à 7, dans lequel la section (S12) du volume inertable (12) augmente progressivement dans toute la hauteur (H10) de ce volume inertable (12).

9. Container inertable (10) de transport d'une poudre de fabrication additive selon l'une des revendications 1 à 7, dans lequel la section (S12) du volume inertable (12) augmente progressivement dans la partie inférieure (18) de ce volume inertable (12), et dans lequel cette section (S12) du volume inertable (12) reste constante dans la partie supérieure (16) de ce volume inertable (12).

10. Container inertable (10) de transport d'une poudre de fabrication additive selon l'une des revendications précédentes, dans lequel le container (10) comprend une ouverture auxiliaire (60) donnant accès à l'intérieur du volume inertable (12), cette ouverture auxiliaire étant équipée d'un couvercle de fermeture (62).

## Patentansprüche

1. Inertisierbarer Behälter (10) zum Transport eines Pulvers für die generative Fertigung, wobei der Behälter (10) ein inertisierbares Volumen (12) und eine Hauptöffnung (14), die den Zugang zum Inneren dieses inertisierbaren Volumens ermöglicht, umfasst, wobei das inertisierbare Volumen (12) einen oberen Teil (16) und einen unteren Teil (18) umfasst, wobei sich die Hauptöffnung (14) im unteren Teil (18) des inertisierbaren Volumens befindet der Querschnitt (S12) des inertisierbaren Volumens (12) sich in wenigstens einem Teil der Höhe (H10) des Behälters (10) und vom unteren Teil (18) zum oberen Teil (16) des inertisierbaren Volumens hin allmählich vergrößert, wobei die Hauptöffnung mit einem passiven Halbventil (20) ausgestattet ist, welches ermöglicht, diese Hauptöffnung (14) luftdicht und luftfeuchtigkeitsdicht zu schließen, und wobei der Behälter **dadurch gekennzeichnet ist, dass** der Behälter mindestens zwei Inertisierungsstutzen umfasst, mindestens einen ersten, oberen Stutzen (22), der den Zugang zum oberen Teil (16) des inertisierbaren Volumens ermöglicht, und mindestens einen zweiten, unteren Stutzen (24), der den Zugang zum unteren Teil (18) des inertisierbaren Volumens ermöglicht.

2. Inertisierbarer Behälter (10) zum Transport eines Pulvers für die generative Fertigung nach Anspruch 1, wobei das passive Halbventil (20) einen Körper (25) umfasst, der eine Klappe (26) zum Schließen der Hauptöffnung (14) des Behälters trägt, wobei das passive Halbventil (20) Mittel zur Verriegelung (28) dieser Klappe in der geschlossenen Position umfasst.

3. Inertisierbarer Behälter (10) zum Transport eines Pulvers für die generative Fertigung nach Anspruch 2, wobei die Mittel zur Verriegelung (28) durch Kopplung des passiven Halbventils mit einem aktiven Halbventil entriegelt werden, wobei die Mittel zur Verriegelung (28) die Trennung des passiven Halbventils und des aktiven Halbventil nur dann ermöglichen, wenn sich die Klappe (26) in der geschlossenen Position befindet, und die Mittel zur Verriegelung (28) die Klappe (26) in der geschlossenen Position halten, solange das passive Halbventil nicht mit einem aktiven Halbventil gekoppelt ist.

4. Inertisierbarer Behälter (10) zum Transport eines Pulvers für die generative Fertigung nach Anspruch 2 oder 3, wobei die Mittel zur Verriegelung (28) der Klappe (26) in der geschlossenen Position durch die Kopplung der Klappe (26) des passiven Halbventils mit der Klappe eines aktiven Halbventils entriegelt werden, wobei das aktive Halbventil Mittel zur Entriegelung der Mittel zur Verriegelung (28) des passiven Halbventils (20) umfasst.

5. Inertisierbarer Behälter (10) zum Transport eines Pulvers für die generative Fertigung, wobei das inertisierbare Volumen (12) eine rechte Seite (38) und eine linke Seite (40) umfasst, der Behälter einen unteren Stutzen (24) und einen oberen Stutzen (22) auf der rechten Seite des inertisierbaren Volumens umfasst und der Behälter einen unteren Stutzen (24) und einen oberen Stutzen (22) auf der linken Seite des inertisierbaren Volumens umfasst.

6. Inertisierbarer Behälter (10) zum Transport eines Pulvers für die generative Fertigung nach einem der vorhergehenden Ansprüche, wobei der Behälter (10) einen unteren Teil (42) und einen oberen Teil (44) umfasst und der Behälter mindestens zwei untere Anschlussstücke (46), die im unteren Teil (42) des Behälters positioniert sind, und mindestens zwei obere Anschlussstücke (48), die im oberen Teil (44) des Behälters positioniert sind, umfasst, wobei ein erstes oberes Anschlussstück (48) und ein erstes unteres Anschlussstück (46) durch ein und dieselbe Leitung (50) mit einem unteren Stutzen (24) verbunden sind, der den Zugang zum unteren Teil (18) des inertisierbaren Volumens ermöglicht, und ein zweites oberes Anschlussstück (48) und ein zweites unteres Anschlussstück (46) durch ein und dieselbe Leitung (52) mit einem oberen Stutzen (22) verbunden sind, der den Zugang zum oberen Teil (16) des inertisierbaren Volumens ermöglicht.

7. Inertisierbarer Behälter (10) zum Transport eines Pulvers für die generative Fertigung, wobei der obere Teil (16) des inertisierbaren Volumens Teil des oberen Teils (44) des Behälters ist und wobei der untere Teil (18) des inertisierbaren Volumens Teil des unteren Teils (42) des Behälters ist.

8. Inertisierbarer Behälter (10) zum Transport eines Pulvers für die generative Fertigung nach einem der Ansprüche 1 bis 7, wobei sich der Querschnitt (S12) des inertisierbaren Volumens (12) über die gesamte Höhe (H10) dieses inertisierbaren Volumens (12) allmählich vergrößert.

9. Inertisierbarer Behälter (10) zum Transport eines Pulvers für die generative Fertigung nach einem der Ansprüche 1 bis 7, wobei sich der Querschnitt (S12) des inertisierbaren Volumens (12) im unteren Teil (18) dieses inertisierbaren Volumens (12) allmählich vergrößert und wobei dieser Querschnitt (S12) des inertisierbaren Volumens (12) im oberen Teil (16) dieses inertisierbaren Volumens (12) konstant bleibt.

10. Inertisierbarer Behälter (10) zum Transport eines Pulvers für die generative Fertigung nach einem der vorhergehenden Ansprüche, wobei der Behälter (10) eine Hilfsöffnung (60) umfasst, die den Zugang zum Inneren des inertisierbaren Volumens (12) ermöglicht, wobei diese Hilfsöffnung mit einem Verschlussdeckel (62) ausgestattet ist.

## Claims

1. Inertable container (10) for transporting an additive manufacturing powder, the container (10) comprising an inertable volume (12) and a main opening (14) granting access to the inside of this inertable volume, the inertable volume (12) comprising an upper portion (16) and a lower portion (18), the main opening (14) being located in the lower portion (18) of the inertable volume, and the section (S12) of the inertable volume (12) increasing gradually over at least part of the height (H10) of the container (10) and from the lower portion (18) towards the upper portion (16) of the inertable volume, the main opening is equipped with a passive half-valve (20) allowing this main opening (14) to be closed in such a way as to be sealed in an airtight and humidity-proof manner, and the container being **characterized in that** the container comprises at least two inerting tappings, at least one first upper tapping (22) granting access to the upper portion (16) of the inertable volume and at least one second lower tapping (24) granting access to the lower portion (18) of the inertable volume.

2. Inertable container (10) for transporting an additive manufacturing powder according to Claim 1, wherein, with the passive half-valve (20) comprising a body (25) supporting a butterfly valve (26) for closing the main opening (14) of the container, the passive half-valve (20) comprises means (28) for locking this butterfly valve in a closed position.

3. Inertable container (10) for transporting an additive manufacturing powder according to Claim 2, wherein the locking means (28) are unlocked by coupling the passive half-valve with an active half-valve, the locking means (28) allowing the separation of the passive half-valve and of the active half-valve only when the butterfly valve (26) is in a closed position, and the locking means (28) keeping the butterfly valve (26) in a closed position as long as the passive half-valve is not coupled with an active half-valve.

4. Inertable container (10) for transporting an additive manufacturing powder according to Claim 2 or Claim 3, wherein the means (28) for locking the butterfly valve (26) in a closed position are unlocked by coupling the butterfly valve (26) of the passive half-valve with the butterfly valve of an active half-valve, the active half-valve comprising means for unlocking the means (28) for locking the passive half-valve (20).

5. Inertable container (10) for transporting an additive manufacturing powder according to one of the preceding claims, wherein, with the inertable volume (12) comprising a right-hand side (38) and a left-hand side (40), the container comprises a lower tapping (24) and an upper tapping (22) on the right-hand side of the inertable volume, and the container comprises a lower tapping (24) and an upper tapping (22) on the left-hand side of the inertable volume.

6. Inertable container (10) for transporting an additive manufacturing powder according to one of the preceding claims, wherein, with the container (10) comprising a lower portion (42) and an upper portion (44), the container comprises at least two lower connectors (46) positioned in the lower portion (42) of the container and at least two upper connectors (48) positioned in the upper portion (44) of the container, a first upper connector (48) and a first lower connector (46) being connected by the same pipe (50) to a lower tapping (24) granting access to the lower portion (18) of the inertable volume, and a second upper connector (48) and a second lower connector (46) being connected by the same pipe (52) to an upper tapping (22) granting access to the upper portion (16) of the inertable volume.

7. Inertable container (10) for transporting an additive manufacturing powder according to one of the preceding claims, wherein the upper portion (16) of the inertable volume forms part of the upper portion (44) of the container, and wherein the lower portion (18) of the inertable volume forms part of the lower portion (42) of the container.

8. Inertable container (10) for transporting an additive manufacturing powder according to one of Claims 1 to 7, wherein the section (S12) of the inertable volume (12) increases gradually over the entire height (H10) of this inertable volume (12).

9. Inertable container (10) for transporting an additive manufacturing powder according to one of Claims 1 to 7, wherein the section (S12) of the inertable volume (12) increases gradually in the lower portion (18) of this inertable volume (12), and wherein this section (S12) of the inertable volume (12) remains constant in the upper portion (16) of this inertable volume (12).

10. Inertable container (10) for transporting an additive manufacturing powder according to one of the preceding claims, wherein the container (10) comprises an additional opening (60) granting access to the inside of the inertable volume (12), this additional opening being equipped with a closure cover (62).
